# FASCICULE DE BREVET EUROPEEN

(11) **EP 2 459 760 B1**
(45) Date de publication et mention de la délivrance du brevet: **03.04.2019**
(21) Numéro de dépôt: 10737879.6
(22) Date de dépôt: 26.07.2010
(51) Int. Cl.: C22B 3/26, C22B 3/40, C22B 59/00, C22B 60/00, C22B 60/02, G21C 19/46, G21F 9/04, G21F 9/12

(54) **AUGMENTATION DU FACTEUR DE SEPARATION ENTRE L'AMERICIUM ET LE CURIUM ET/OU ENTRE DES LANTHANIDES DANS UNE OPERATION D'EXTRACTION LIQUIDE-LIQUIDE**
ERHÖHUNG DES TRENNUNGSFAKTORS ZWISCHEN AMERICIUM UND CURIUM UND/ODER ZWISCHEN DEN LANTHANIDEN MITTELS FLÜSSIG-FLÜSSIG EXTRAKTION
AUGMENTATION OF THE SEPARATION FACTOR BETWEEN AMERICIUM AND CURIUM AND/OR BETWEEN LANTHANIDES BY SOLVENT EXTRACTION

(30) Priorité: 27.07.2009 FR 0955240
(43) Date de publication de la demande: 06.06.2012
(73) Titulaire: Commissariat à l'Énergie Atomique et aux Énergies Alternatives, 75015 Paris (FR); Orano Cycle, 92400 Courbevoie (FR)
(72) Inventeur: HERES, Xavier, 84000 Avignon (FR); BARON, Pascal, 30200 Bagnols-sur-ceze (FR)
(74) Mandataire: Ilgart, Jean-Christophe
(86) Numéro de dépôt international: PCT/EP2010/060806
(87) Numéro de publication internationale: WO 2011/012579

(56) Documents cités:
- EP-A1- 1 923 473
- FR-A- 2 738 663
- FR-A- 2 810 679
- FR-A- 2 907 346
- DATABASE COMPENDEX novembre 2007 (2007-11), MODOLO G.: "Development of a TOGDA based process for partitioning of actinides from a PUREX raffinate" XP002573252 Database accession no. E20074219872355
- DATABASE WPI Week 200533 Thomson Scientific, London, GB; AN 2005-319661 XP002573253 -& JP 2005 114448 A (JAPAN ATOMIC ENERGY AGENCY) 28 avril 2005 (2005-04-28)
- ANSARI S.A. ET AL.: "Counter-current extraction of uranium and lanthanides from simulated high-level waste using N,N,N',N'-tetraoctyl diglycolamide" SEPARATION AND PURIFICATION TECHNOLOGY, vol. 66, no. 1, 7 avril 2009 (2009-04-07), pages 118-124, XP002573334
- DATABASE COMPENDEX 2008, SHIMOJO K. ET AL.: "Extraction behavior of lanthanides using a diglycolamide derivative TOGDA in ionic liquids" XP002573335 Database accession no. E20084011611708
- DATABASE COMPENDEX 1 octobre 2008 (2008-10-01), ANSARI S.A. ET AL.: "Separation of Am(III) and trivalent lanthanides from simulated high-level waste using a hollow-fiber supported liquid membrane" XP002573336 Database accession no. E20083611518855

## Description

### DOMAINE TECHNIQUE

La présente invention se rapporte à l'utilisation d'une famille particulière de complexants et, plus précisément, de diglycolamides, pour augmenter le facteur de séparation entre l'américium et le curium et/ou entre les lanthanides dans une opération d'extraction liquide-liquide.

L'invention est susceptible de trouver application dans le domaine du traitement et du recyclage des combustibles nucléaires irradiés où elle présente un intérêt tout particulier pour récupérer de façon sélective l'américium à partir de solutions aqueuses de haute activité comme, par exemple, des raffinats issus du traitement de combustibles nucléaires irradiés par un procédé PUREX ou COEX™.

Elle peut également trouver application dans le domaine du traitement des minerais de terres rares, par exemple du type monazite, xénotime ou bastnaésite, pour faciliter la séparation de terres rares « légères », c'est-à-dire de numéro atomique inférieur à 63 (lanthane, cérium, praséodyme, néodyme, samarium), de terres rares « lourdes », c'est-à-dire de numéro atomique supérieur à 63 (europium, gadolinium, terbium, ...), et éventuellement de l'yttrium, qui peut être récupéré pur, ou celle de deux terres rares de numéros atomiques adjacents ou proches telles que le néodyme et le samarium. L'yttrium pur possède de nombreuses applications comme la luminescence, la fluorescence et les matériaux optiques.

### ÉTAT DE LA TECHNIQUE ANTÉRIEURE

Les procédés, qui permettent d'extraire et de purifier l'uranium et le plutonium présents dans les liqueurs de dissolution de combustibles nucléaires irradiés comme le procédé PUREX (qui est actuellement utilisé dans les usines de traitement des combustibles nucléaires irradiés) et le procédé COEX™ (qui est décrit dans la demande internationale PCT WO 2007/135178, **[1]**), génèrent des effluents auxquels on donne le nom de raffinats.

Ces raffinats sont des solutions aqueuses à forte acidité nitrique, typiquement de 2 à 5 M, qui contiennent deux actinides mineurs, à savoir l'américium et le curium, des lanthanides comme le lanthane, le cérium, le praséodyme, le néodyme, le samarium et l'europium, des produits de fission autres que les lanthanides comme le molybdène, le zirconium, le rubidium, le ruthénium, le rhodium, le palladium et l'yttrium, ainsi que des produits de corrosion comme le fer et le chrome.

Leur gestion consiste actuellement à les concentrer au maximum puis à les conditionner dans des matrices vitreuses en vue d'un entreposage avant un stockage ultime.

Depuis le début des années 1990, des recherches sont activement menées en France pour parvenir à réaliser une séparation poussée des éléments métalliques présents dans les raffinats issus du traitement de combustibles nucléaires irradiés par le procédé PUREX. Le principal objectif de cette séparation poussée est de réduire la radiotoxicité des déchets vitrifiés en retirant de ces raffinats les éléments les plus radiotoxiques dans le but de les transmuter.

Une voie de séparation poussée a particulièrement été explorée : il s'agit de l'hydrométallurgie qui est basée sur des procédés de séparation par extraction liquide-liquide.

Or, il se trouve que la plupart des extractants dont l'utilisation a été proposée à ce jour comme l'oxyde de diisobutylphényloctylcarbamoylméthylphosphine (ou CMPO) et autres oxydes de carbamoylphosphine, l'oxyde de trioctylphosphine (ou TOPO) et autres oxydes de phosphine, le *N,N*'-diméthyl-*N,N*'-dioctylhexyléthoxymalonamide (ou DMDOHEMA) et autres malonamides, l'acide diisodécylphosphorique (ou DIDPA) et autres acides phosphoriques, etc, présente une sélectivité peu marquée, voire pas de sélectivité du tout, pour l'américium par rapport au curium. Ceci est dû à la très grande similitude existant entre les propriétés physicochimiques de ces deux éléments.

Il en résulte qu'il est actuellement extrêmement difficile de séparer l'américium du curium par extraction liquide-liquide et que cette séparation, lorsqu'elle est possible, nécessite, pour obtenir des performances de séparation satisfaisantes, d'employer un nombre élevé d'étages, ce qui est pénalisant d'un point de vue industriel.

Or, il serait très intéressant de pouvoir récupérer sélectivement l'américium présent dans les raffinats issus du traitement de combustibles nucléaires irradiés par les procédés de type PUREX ou COEX™, avant que ces raffinats ne soient envoyés à la vitrification.

En effet, outre de réduire la radiotoxicité des déchets vitrifiés, une récupération sélective de l'américium permettrait d'abaisser significativement la charge thermique de ces déchets et, par là même, leur emprise au stockage.

Par ailleurs, le curium 244, qui représente l'isotope majoritaire du curium présent dans les déchets nucléaires, est un puissant émetteur neutronique, source d'une radioactivité importante. Récupérer l'américium sans le curium permettrait donc de simplifier considérablement la fabrication, la manutention et le transport des assemblages combustibles de transmutation contenant de l'américium. Les combustibles nucléaires de transmutation pourraient ainsi contenir plus d'américium.

Les Inventeurs se sont donc fixé pour objectif de trouver un moyen qui permette, d'une manière générale, de faciliter la séparation de l'américium et du curium lorsque l'on cherche à séparer ces deux éléments l'un de l'autre par extraction liquide-liquide.

Ils se sont aussi fixé pour objectif que ce moyen soit efficace et, donc, utilisable aussi bien dans le cas où l'on cherche à séparer l'américium du curium à partir d'une solution aqueuse contenant, outre ces deux éléments, des lanthanides et d'autres produits de fission que dans le cas où l'on cherche à séparer l'américium du curium à partir d'une solution aqueuse ne contenant que ces deux éléments. Dans cette optique, ils ont notamment souhaité que ce moyen ne mette en jeu aucune réaction d'oxydoréduction de l'américium ou d'un quelconque autre élément métallique.

Ils se sont enfin fixé pour objectif que ce moyen soit simple à mettre en oeuvre et que son utilisation à une échelle industrielle, en aval d'un procédé PUREX ou COEX™, n'ajoute pas, aux contraintes déjà imposées par ces procédés, des contraintes additionnelles, notamment en termes de gestion des effluents générés, de corrosion, de toxicité et de sécurité.

Or, il s'avère que, dans le cadre de leurs travaux, les Inventeurs ont constaté que la présence d'un diglycolamide dans une phase aqueuse acide contenant de l'américium, du curium, des lanthanides et d'autres produits de fission se traduit, lorsque cette phase aqueuse est soumise à une opération d'extraction liquide-liquide, c'est-à-dire qu'elle est mise en contact avec une phase organique contenant un extractant (autre qu'un diglycolamide) puis séparée de cette phase, par une augmentation substantielle du facteur de séparation entre l'américium et le curium par rapport à celui obtenu en l'absence du diglycolamide et ce, quel que soit le degré de sélectivité que présente l'extractant contenu dans la phase organique pour l'américium par rapport au curium.

Ils ont de plus constaté que la présence du diglycolamide dans ladite phase aqueuse acide se traduit également par une augmentation du facteur de séparation entre les lanthanides « légers » et les lanthanides « lourds » par rapport à celui obtenu en l'absence du diglycolamide.

Et c'est sur ces constatations qu'est basée la présente invention.

Il est à noter qu'il est connu d'utiliser des diglycolamides et, en particulier, le *N,N,N',N'-*tétraoctyldiglycolamide (ou TODGA), seuls ou en association avec d'autres composés du type phosphate de tri-*n*-butyle (ou TBP) ou *N,N*-dihexyloctanamide (ou DHOA), comme agents extractants pour extraire d'une phase aqueuse soit des lanthanides, soit des lanthanides et des actinides(III), soit des lanthanides et des actinides(III) et (IV), soit encore l'ensemble des actinides(III), (IV), (V) et (VI) (voir, par exemple, ANSARI et al., Separation and Purification Technology, 66, 118-124, 2009 **[2]** ; SHIMOJO et al., Dalton Transactions, 37, 5083-5088, 2008 **[3]** ; MODOLO et al., Solvent Extraction Ion Exchange, 25, 703-720, 2007 **[4] ;** la demande de brevet français 2 810 679 **[5] ;** ANSARI et al., Separation and Purification Technology, 63, 239-242, 2008 **[6]** ; la demande de brevet japonais 2005-114448 **[7]** et la demande de brevet français 2 907 346 **[8]**).

Il est également connu d'utiliser des diglycolamides comme agents complexants pour désextraire d'une phase organique des actinides, des lanthanides et autres produits de fission (voir, par exemple, SASAKI et al., Analytical Sciences, 23, 727-731, 2007 **[9]**).

Par contre, ce qui n'a jamais été proposé dans la littérature, c'est d'utiliser des diglycolamides comme agents complexants pour augmenter le facteur de séparation entre l'américium et le curium et/ou entre les lanthanides dans une opération d'extraction liquide-liquide.

### EXPOSÉ DE L'INVENTION

La présente invention a donc pour objet l'utilisation d'un diglycolamide pour augmenter le facteur de séparation entre l'américium et le curium et/ou entre les lanthanides que l'on obtient au terme d'une opération d'extraction liquide-liquide comprenant la mise en contact d'une phase aqueuse acide dans laquelle se trouvent l'américium, le curium et/ou les lanthanides, avec une phase organique non miscible à l'eau, contenant au moins un extractant autre qu'un diglycolamide, dans un diluant organique, puis la séparation desdites phases aqueuse et organique, ledit diglycolamide étant ajouté à ladite phase aqueuse.

On rappelle que, dans le domaine des extractions liquide-liquide, le coefficient de distribution d'un élément métallique M, noté D_{M}, correspond au rapport, à l'équilibre, des concentrations (ou activités) de cet élément dans les phases organique et aqueuse, et que le facteur de séparation entre deux éléments métalliques M1 et M2, noté FS_{M1/M2}, correspond à D_{M1}/D_{M2}, c'est-à-dire au rapport des coefficients de distribution des éléments métalliques M1 et M2.

On rappelle également que les diglycolamides sont des composés de formule (I) ci-après :

R¹(R²)N-C(O)-CH₂-O-CH₂-C(O)-N(R³)R⁴ (I)

dans laquelle R¹, R², R³ et R⁴, qui peuvent être identiques ou différents, sont typiquement des groupes alkyles.

Conformément à l'invention, le diglycolamide est, de préférence, choisi parmi les diglycolamides dans lesquels le nombre total d'atomes de carbone que présentent ensemble R¹, R², R³ et R⁴ est au plus égal à 20, de sorte à présenter un caractère hydrophile suffisant pour pouvoir être utilisé en phase aqueuse.

De tels diglycolamides sont notamment le *N,N,N',N'-*tétraméthyldiglycolamide (ou TMDGA), le *N,N,N',N'*-tétraéthyldiglycolamide (ou TEDGA) et le *N,N,N',N'*-tétrapropyldiglycolamide (ou TPDGA), le TEDGA étant tout particulièrement préféré.

Le diglycolamide est avantageusement ajouté à la phase aqueuse acide en une quantité telle que sa concentration dans cette phase soit comprise entre 0,01 et 0,5 mole/L et, mieux encore, entre 0,03 et 0,1 mole/L.

L'extractant présent dans la phase organique est avantageusement un extractant solvatant, auquel cas il est, de préférence, choisi parmi les extractants solvatants qui présentent une sélectivité, même très faible, pour l'américium par rapport au curium, c'est-à-dire qui sont capables de davantage extraire l'américium que le curium d'une phase aqueuse acide.

De tels extractants solvatants sont notamment :
- les malonamides comme le *N,N'*-diméthyl-*N,N'*-dibutyltétradécylmalonamide (ou DMDBTDMA), le *N,N'*-diméthyl-*N,N'*-dioctylhexyléthoxymalonamide (ou DMDOHEMA), le *N,N'*-diméthyl-*N,N'*-dioctyloctylmalonamide (ou DMDOOMA), le *N,N'*-diméthyl-*N,N'*-dioctylhexylmalonamide (ou DMDOHxMA), le *N,N'*-diméthyl-*N,N'*-dioctylheptylmalonamide (ou DMDOHpMA) ou le *N,N'*-diméthyl-*N,N'*-dibutyl-dodécylmalonamide (ou DMDBDDEMA) ;
- les oxydes de carbamoylphosphine comme l'oxyde de diisobutylphényloctylcarbamoylméthylphosphine (ou CMPO) ;
- les sulfures de triisobutylphosphine ;
- les carbamoylphosphonates comme le dihexyl-*N,N*-diéthylcarbamoylméthylphosphonate (ou DHDECMP) ; et
- leurs mélanges.

Toutefois, comme montré dans les exemples ci-après, il est également possible d'utiliser un extractant solvatant qui ne présente pas de sélectivité pour l'américium par rapport au curium comme un oxyde de phosphine du type oxyde de trioctylphosphine (ou TOPO) ou un mélange d'oxydes de phosphine tel que le mélange d'oxydes de trialkylphosphine connu sous le sigle TRPO.

De préférence, l'extractant présent dans la phase organique est un malonamide, auquel cas ce dernier est avantageusement du DMDOHEMA.

Un extractant acide (ainsi dénommé car il présente une ou plusieurs fonctions acides) peut être ajouté à l'extractant solvatant afin, par exemple, d'augmenter la capacité de charge de l'extractant solvatant ou de modifier le facteur de séparation Am/Cm. Il peut, lui, notamment être choisi parmi :
* les acides contenant du phosphore tels que les acides mono- et dialkylphosphoriques ayant au moins 7 atomes de carbone comme l'acide di(2-éthylhexyl)phosphorique (ou HDEHP), l'acide (2-éthylhexyl)dihydrogène phosphate, l'acide diisodécylphosphorique (ou DIDPA), les acides mono- et dialkylphosphoniques comme l'acide 2-éthylhexyl-2-éthylhexylphosphonique (ou HEHEHP), les acides mono- et dialkylphosphiniques, les acides thiophosphoriques, les acides thiophosphoniques et les acides thiophosphiniques ;
* les acides carboxyliques lipophiles comme l'acide décanoïque ou dodécanoique;
* les acides sulfoniques comme l'acide dinonylnaphtalène sulfonique (ou HDNNS) ; et
* leurs mélanges.

Quant au diluant organique, il est, de préférence, choisi parmi les diluants organiques polaires ou aliphatiques dont l'utilisation a été proposée pour la réalisation d'extractions liquide-liquide et, notamment, pour le traitement des combustibles nucléaires irradiés comme le toluène, le xylène, le t-butylbenzène, le triisopropylbenzène, le kérosène et les dodécanes, linéaires ou ramifiés, tels que le *n*-dodécane ou le tétrapropylène hydrogéné (ou TPH).

Conformément à l'invention, la phase aqueuse acide est, de préférence, une solution aqueuse nitrique issue du traitement de combustibles nucléaires irradiés et, mieux encore, une solution qui contient à la fois de l'américium, du curium, des lanthanides et d'autres produits de fission et/ou de corrosion tel qu'un raffinat issu du traitement de combustibles nucléaires irradiés par un procédé PUREX ou COEX™.

Auquel cas, l'invention peut être mise à profit pour récupérer sélectivement l'américium, c'est-à-dire sans curium, sans lanthanides ni autres produits de fission et/ou de corrosion, à partir de cette solution.

L'opération d'extraction est alors, de préférence, réalisée à une acidité nitrique allant de 0,1 moles/L à 6 moles/L et est suivie :
- d'une opération de lavage de la phase organique issue de cette opération d'extraction ; cette opération de lavage, qui permet de parfaire la séparation de l'américium du curium, est réalisée au moyen d'une phase aqueuse nitrique, par exemple 0,1 M à 6 M, et contenant avantageusement un diglycolamide, lequel est, de préférence, le même diglycolamide que celui utilisé pour l'opération d'extraction ; puis
- d'une ou plusieurs opérations permettant de séparer l'américium des lanthanides et autres produits de fission et/ou de corrosion susceptibles d'avoir été extraits en phase organique conjointement avec l'américium, et que l'on réalise selon des modalités qui dépendent de l'extractant présent dans ladite phase organique.

Ainsi, par exemple :
* si l'extractant présent dans la phase organique est du CMPO, la séparation de l'américium des lanthanides et autres produits de fission et/ou de corrosion présents dans la phase organique pourra être réalisée selon les mêmes modalités que celles préconisées dans l'état de la technique pour séparer les actinides(III) des lanthanides et autres produits de fission à partir d'une phase organique contenant du CMPO, par exemple en un cycle avec le procédé SETFICS (demande de brevet français 2 738 663, **[10]**) ou en deux cycles avec le procédé TALSPEAK (WEAVER et KAPPELMAN, Rapport ORNL-3559, 1964, **[11]**) en second cycle ; tandis que
* si l'extractant présent dans la phase organique est du DMDOHEMA, la séparation de l'américium des lanthanides et autres produits de fission et/ou de corrosion présents dans la phase organique pourra être réalisée selon les mêmes modalités que celles préconisées dans l'état de la technique pour séparer les actinides(III) des lanthanides et autres produits de fission et/ou de corrosion à partir d'une phase organique contenant du DMDOHEMA, par exemple en un cycle avec le procédé PALADIN (demande de brevet français 2 845 616 **[12]**).

En variante, la solution aqueuse nitrique issue du traitement de combustibles nucléaires irradiés peut également être une solution qui ne contient plus que de l'américium, du curium et des lanthanides, voire d'une solution qui ne contient plus que de l'américium et du curium comme une solution issue du traitement d'un raffinat PUREX ou COEX™ par un procédé de séparation poussée tel que le procédé DIAMEX-SANEX (BARON et al., Proceedings of the International Conference on Back-End of the Fuel Cycle : From Research to Solutions GLOBAL'01, Paris, France, 9-13 septembre 2001, publié par INIS-FR--1108) **[13]** ; DHAMI P.S. et al., Separation Science & Technology, 36(2), 325-335, 2001 **[14]**).

Conformément à l'invention, la phase aqueuse acide soumise à l'opération d'extraction peut également être une solution aqueuse nitrique résultant de la dissolution dans de l'acide nitrique d'un minerai de terres rares, par exemple de type monazite, xénotime ou bastnaésite, auquel cas cette solution ne contient ni américium ni curium et l'invention peut être mise à profit pour séparer ces terres rares les unes des autres.

D'autres caractéristiques et avantages de l'invention ressortiront des exemples qui suivent et qui se rapportent à des essais ayant permis de mettre en évidence l'aptitude des diglycolamides à augmenter le facteur de séparation entre l'américium et le curium et entre les lanthanides au cours d'extractions réalisées en utilisant, d'une part, des phases aqueuses simulant des raffinats issus du traitement de combustibles nucléaires irradiés par le procédé PUREX et, d'autre part, différents types de phase organique.

Il va de soi que ces exemples ne sont donnés qu'à titre d'illustrations de l'objet de l'invention et ne doivent en aucun cas être interprétés comme une limitation de cet objet.

### EXEMPLES

### EXEMPLE 1 : Extractions par une phase organique

### contenant du CMPO et du TBP dans du TPH

Des extractions ont été réalisées en utilisant :
- comme phases aqueuses : quatre solutions aqueuses - dénommées ci-après S1, S2, S3 et S4 - simulant des raffinats issus du traitement, par le procédé PUREX, de combustibles nucléaires irradiés de type UOX1-UOX2 (sauf en ce qui concerne l'américium 241 et le curium 244 qui ne sont présents qu'à l'état de traces dans ces solutions) et auxquelles a été ou non ajouté du TEDGA ; et
- comme phases organiques : des phases comprenant 0,20 mole/L de CMPO (en tant qu'extractant solvatant) et 1 mole/L de phosphate de tri-*n*-butyle (ou TPB, en tant qu'agent modificateur de phase) dans du TPH.

La composition qualitative et quantitative de chacune des solutions S1 à S4 est présentée dans le tableau I ci-après.

Tous les éléments métalliques présents dans ces solutions ont été dissous sous la forme de nitrates.

**TABLEAU I**

| | **Concentrations en mmole(s)/L** | | | |
|---|---|---|---|---|
| | **S1** | **S2** | **S3** | **S4** |
| **HNO₃** | 1000 | 1000 | 1900 | 1900 |
| **TEDGA** | --- | 15 | --- | 30 |
| **²⁴¹Am** | 3,3.10⁻³ | 3,3.10⁻³ | 3,3.10⁻³ | 3,3.10⁻³ |
| **²⁴⁴Cm** | 1,4.10⁻⁴ | 1,4.10⁻⁴ | 1,4.10⁻⁴ | 1,4.10⁻⁴ |
| **Y** | 0,15 | 0,17 | 0,30 | 0,33 |
| **Gd** | 0,07 | 0,07 | 0,13 | 0,14 |
| **Eu** | 0,09 | 0,10 | 0,17 | 0,19 |
| **Sm** | 0,36 | 0,39 | 0,72 | 0,77 |
| **Nd** | 1,92 | 2,00 | 3,88 | 3,92 |
| **Pr** | 0,76 | 0,81 | 1,54 | 1,59 |
| **Ce** | 1,39 | 1,47 | 2,81 | 2,89 |
| **La** | 0,71 | 0,75 | 1,42 | 1,46 |
| **Pd** | 1,26 | 1,26 | 2,51 | 2,51 |
| **Mo** | 2,99 | 3,16 | 6,07 | 6,21 |
| **Zr** | 3,27 | 3,49 | 6,61 | 6,84 |
| **Fe** | 0,46 | 0,49 | 0, 91 | 0,93 |

Chacune des solutions S1 à S4 a été mise en contact, dans des tubes, avec l'une des phases organiques (préalablement équilibrée en acide, par addition d'acide nitrique 1 M dans le cas des solutions S1 et S2, et 1,9 M dans le cas des solutions S2 et S4), à raison de 1 volume de solution aqueuse pour 1 volume de phase organique, et les phases ainsi mises en contact ont été laissées sous agitation pendant 30 minutes à une température constante de 25°C.

Après décantation et séparation des phases aqueuses et organiques, les activités de l'américium et du curium dans chacune de ces phases ont été mesurées par spectrométrie α.

Les concentrations des autres éléments métalliques dans les phases aqueuses ont été, quant à elles, mesurées par spectrométrie d'émission atomique par plasma à couplage inductif (ou ICP-AES) tandis que les concentrations de ces autres éléments métalliques dans les phases organiques ont été déterminées de manière indirecte.

En effet, les concentrations des éléments métalliques autres que l'américium et le curium dans les phases organiques ont été déterminées en désextrayant quantitativement ces éléments dans des phases aqueuses et en mesurant ensuite par ICP-AES leurs concentrations dans les phases aqueuses ayant été utilisées pour cette désextraction. Pour ce faire, les phases organiques ont été mises en contact avec des phases aqueuses comprenant chacune 0,05 mole/L d'acide *N*-(2-hydroxyéthyl)éthylène diamine triacétique (ou HEDTA), 0,5 mole/L d'acide oxalique, 0,3 mole/L de TEDGA et 1 mole/L d'acide nitrique, à raison d'1 volume de phase organique pour 1 volume de phase aqueuse, et laissées sous agitation pendant 30 minutes à une température constante de 25°C.

Le tableau II ci-après présente, pour chacune des solutions S1 à S4, les coefficients de distribution D_{M} et les facteurs de séparation FS_{Am/M} obtenus à partir des activités et des concentrations ainsi déterminées.

**TABLEAU II**

| | **S1** | | **S2** | | **S3** | | **S4** | |
|---|---|---|---|---|---|---|---|---|
| | **D_{M}** | **FS_{Am/M}** | **D_{M}** | **FS_{Am/M}** | **D_{M}** | **FS_{Am/M}** | **D_{M}** | **FS_{Am/M}** |
| **²⁴¹Am** | 12 | 1,0 | 1,1 | 1,0 | 12 | 1,0 | 0,89 | 1,0 |
| **²⁴⁴Cm** | 7,5 | 1,6 | 0,49 | 2,2 | 7,9 | 1,5 | 0,34 | 2,6 |
| **Y** | 1,3 | 9,2 | 0,02 | 55 | 1,4 | 8,6 | 0,02 | 45 |
| **Gd** | 4,2 | 2,9 | 0,17 | 6,5 | 4,9 | 2,4 | 0,04 | 22 |
| **Eu** | 9,2 | 1,3 | 0,14 | 7,9 | 7,3 | 1,6 | 0,10 | 8,9 |
| **Sm** | 11 | 1,1 | 0,68 | 1,6 | 11 | 1,1 | 1,3 | 0,7 |
| **Nd** | 16 | 0,8 | 2,1 | 0,5 | 13 | 0,9 | 3,7 | 0,2 |
| **Pr** | 14 | 0,9 | 3,1 | 0,4 | 13 | 0,9 | 4,9 | 0,2 |
| **Ce** | 16 | 0,8 | 3,7 | 0,3 | 13 | 0,9 | 5,3 | 0,2 |
| **La** | 8,8 | 1,4 | 3,3 | 0,3 | 7,1 | 1,7 | 4,0 | 0,2 |
| **Pd** | 1,0 | 12 | 10 | 0,1 | 0,4 | 30 | 1,8 | 0,5 |
| **Mo** | 8,4 | 1,4 | 4,4 | 0,3 | 8,8 | 1,4 | 6,7 | 0,1 |
| **Zr** | 32 | 0,4 | 0,013 | 85 | 48 | 0,3 | 0,006 | 148 |
| **Fe** | 0,09 | 133 | 0,12 | 9,2 | 0,09 | 133 | 0,15 | 5,9 |

Ce tableau montre que la présence de 0,015 mole/L de TEDGA dans la solution S2 se traduit par une augmentation du facteur de séparation entre l'américium et le curium, FS_{Am/Cm}, de presque 40% par rapport à celui obtenu pour la solution S1, qui présente la même acidité nitrique que la solution S2 (HNO₃ = 1 M) mais est exempte de TEDGA, tandis que la présence de 0,030 mole/L de TEDGA dans la solution S4 se traduit par une augmentation du facteur de séparation FS_{Am/Cm} de presque 75% par rapport à celui obtenu pour la solution S3, qui présente la même acidité nitrique que la solution S4 (HNO₃ = 1,9 M) mais est exempte de TEDGA.

Il montre également que la présence de TEDGA dans les solutions S2 et S4 se traduit par une diminution des coefficients de distribution de l'américium et du curium, D_{Am} et D_{Cm}, par rapport à ceux obtenus en l'absence de TEDGA. Ainsi, la présence de 0,015 mole/L de TEDGA dans la solution S2 fait chuter D_{Am} de 12 à 1,1 et D_{Cm} de 7,5 à 0,49 tandis que la présence de 0,030 mole/L de TEDGA dans la solution S4 fait chuter D_{Am} de 12 à 0,89 et D_{Cm} de 7,9 à 0,34.

Il montre encore que la présence de TEDGA dans les solutions S2 et S4 contribue à augmenter l'ensemble des facteurs de séparation entre les lanthanides par rapport à ceux obtenus en l'absence de TEDGA. Ainsi, en présence de TEDGA, les lanthanides « légers » (La, Ce, Pr, Nd) sont au moins deux fois mieux extraits que l'américium alors que les lanthanides « lourds » (Eu et Gd) et l'yttrium sont 7 à 55 fois moins bien extraits que l'américium.

Enfin, il montre que la présence de TEDGA dans les solutions S2 et S4 se traduit par une inhibition du zirconium puisque le facteur de séparation entre l'américium et le zirconium passe de 0,4 à 85 en présence de 0,015 mole/L de TEDGA (solution S1 *versus* solution S2) et de 0,3 à 148 en présence de 0,030 mole/L de TEDGA (solution S3 *versus* solution S4).

Ces résultats sont très intéressants car ils permettent d'envisager un schéma réaliste de mise en oeuvre, à une échelle industrielle, d'un procédé dont l'objectif serait de récupérer sélectivement l'américium à partir d'une solution aqueuse de haute activité de type raffinat issu du traitement de combustibles nucléaires irradiés par un procédé PUREX ou COEX™ et dont la première étape consisterait à extraire l'américium de cette solution, à laquelle serait ajouté du TEDGA, au moyen d'une phase organique contenant un mélange de CMPO et de TBP dans un diluant organique de type TPH.

En effet, pour qu'une telle extraction permette d'obtenir une séparation satisfaisante de l'américium du curium, il convient que le facteur d'extraction de l'américium E_{Am} (qui correspond au rapport des débits des phases organique et aqueuse, noté O/A, circulant dans l'extracteur dans lequel est réalisée cette extraction multiplié par le coefficient de distribution de l'américium, D_{Am}) soit supérieur à 1 et que le facteur d'extraction du curium E_{Cm} (qui correspond, lui, au rapport O/A multiplié par le coefficient de distribution du curium, D_{Cm}) soit inférieur à 1.

Comme le montre le tableau II ci-avant, en l'absence de TEDGA, les D_{Cm} sont au moins de 7,5, ce qui implique d'utiliser, pour la phase organique, un débit au moins huit fois inférieur à celui utilisé pour la solution aqueuse de haute activité si l'on veut obtenir E_{Am} > à 1 et E_{Cm} < à 1. Il en résulte un risque non négligeable de saturation de la phase organique en éléments métalliques puisque les éléments extraits seraient alors huit fois plus concentrés dans la phase organique que dans la solution aqueuse.

Par contre, en ajoutant du TEDGA à la solution aqueuse de haute activité, il serait possible d'employer un rapport O/A de 1 ou proche de 1 (puisque les D_{Cm} sont inférieurs à 0,5), ce qui est beaucoup plus acceptable pour une mise en oeuvre industrielle.

De plus, l'augmentation du facteur de séparation FS_{Am/Cm} induite par le TEDGA permettrait de réaliser l'extraction de l'américium dans des extracteurs comportant un nombre d'étages bien inférieur à celui qui serait nécessaire si cette extraction devait être réalisée sans ajouter de TEDGA à la solution aqueuse de haute activité.

Ainsi, par exemple, pour récupérer 99% d'américium en phase organique et laisser 99% du curium en phase aqueuse, il serait possible d'utiliser 20 étages pour un facteur de séparation FS_{Am/Cm} de 2,6 (tel qu'obtenu pour la solution S4 dans le présent exemple) alors que 39 étages, soit le double, seraient nécessaires pour un facteur de séparation FS_{Am/Cm} de 1,5 (tel qu'obtenu pour la solution S3 dans le présent exemple).

Par ailleurs, le fait qu'en présence de TEDGA, les lanthanides « légers » soient bien mieux extraits que l'américium et que les lanthanides « lourds » et l'yttrium soient, au contraire, bien moins extraits que l'américium permettrait de limiter les risques d'accumulation de ces éléments dans les étages des extracteurs où serait réalisée l'extraction de l'américium en cas d'accumulation de l'américium et du curium du fait de la faible sélectivité de la phase organique vis-à-vis de l'américium par rapport au curium. Ainsi, la quantité de lanthanides présente dans les étages serait réduite par rapport à celle présente dans un schéma n'utilisant pas de TEDGA, ce qui réduit le risque de saturation de la phase organique ou du complexant en phase aqueuse.

Enfin, l'inhibition de l'extraction du zirconium par le TEDGA permettrait de supprimer la nécessité de gérer cet élément en aval du procédé.

Une fois l'américium extrait de la solution aqueuse de haute activité et ainsi séparé du curium, sa séparation des produits de fission l'ayant suivi dans la phase organique pourra être réalisée selon les mêmes modalités que celles préconisées dans l'état de la technique pour séparer les actinides(III) des produits de fission à partir d'une phase organique contenant du CMPO, par exemple en un cycle avec le procédé SETFICS ou en deux cycles avec le procédé TALSPEAK en second cycle.

Cet exemple montre que l'augmentation du facteur de séparation entre les lanthanides et l'yttrium peut également avantageusement être utilisée pour la séparation des terres rares entre elles et particulièrement de l'yttrium et des terres rares, puisque le facteur de séparation FS(Ln/Y) est supérieur à 7 avec la solution S2 (deux fois plus fort qu'avec S1), valeur largement suffisante pour récupérer plus de 99,9% d'yttrium en phase aqueuse d'extraction avec moins de 0,1% des lanthanides, avec 16 étages.

### EXEMPLE 2 : Extractions par une phase organique contenant du TOPO et du TBP dans du TPH

Des extractions analogues à celles décrites dans l'exemple 1 ci-avant ont été réalisées en utilisant les mêmes solutions aqueuses S1 à S4 et le même protocole opératoire que ceux utilisés dans l'exemple 1 mais en employant comme phases organiques, des phases comprenant 0,5 mole/L de TOPO (en tant qu'extractant solvatant) et 1 mole/L de TBP (en tant qu'agent modificateur de phase) dans du TPH.

Là également, chacune des solutions aqueuses S1 à S4 a été mise en contact, dans des tubes, avec l'une des phases organiques (préalablement équilibrée en acide par addition d'acide nitrique 1 M dans le cas des solutions S1 et S2 et 1,9 M dans le cas des solutions S3 et S4), à raison de 1 volume de solution aqueuse pour 1 volume de phase organique, et les phases ainsi mises en contact ont été laissées sous agitation pendant 30 minutes à une température constante de 25°C.

Puis, après décantation et séparation des phases aqueuses et organiques, les activités de l'américium et du curium et les concentrations des autres éléments métalliques dans les phases aqueuses et organiques ont été déterminées comme décrit dans l'exemple 1 ci-avant.

Le tableau III ci-après présente, pour chacune des solutions S1 à S4, les coefficients de distribution D_{M} et les facteurs de séparation FS_{Am/M} obtenus à partir des activités et des concentrations ainsi déterminées.

**TABLEAU III**

| | **S1** | | **S2** | | **S3** | | **S4** | |
|---|---|---|---|---|---|---|---|---|
| | **D_{M}** | **FS_{Am/M}** | **D_{M}** | **FS_{Am/M}** | **D_{M}** | **FS_{Am/M}** | **D_{M}** | **FS_{Am/M}** |
| **²⁴¹Am** | 3, 0 | 1,0 | 0,36 | 1,0 | 0,90 | 1,0 | 0,13 | 1,0 |
| **²⁴⁴Cm** | 3,1 | 1,0 | 0,22 | 1,6 | 0,82 | 1,1 | 0,08 | 1,6 |
| **Y** | 3,5 | 0,9 | 0,07 | 5,1 | 1,7 | 0,5 | 0,05 | 2,6 |
| **Gd** | 3,0 | 1,0 | 0,22 | 1,6 | 1,4 | 0,6 | 0,05 | 2,6 |
| **Eu** | 5, 6 | 0,5 | 0,20 | 1,8 | 1,7 | 0,5 | 0,07 | 1,9 |
| **Sm** | 4,7 | 0,6 | 0,55 | 0,7 | 1,6 | 0,6 | 0,48 | 0,3 |
| **Nd** | 2,8 | 1,1 | 0,69 | 0,5 | 0,89 | 1,0 | 0,43 | 0,3 |
| **Pr** | 2,2 | 1,4 | 0,71 | 0,5 | 0,74 | 1,2 | 0,38 | 0,3 |
| **Ce** | 1,7 | 1,8 | 0,63 | 0,6 | 0,56 | 1,6 | 0,31 | 0,4 |
| **La** | 0,70 | 4,3 | 0,32 | 1,1 | 0,26 | 3,5 | 0,14 | 0,9 |
| **Pd** | 11 | 0,3 | 4,5 | 0,1 | 1,2 | 0,8 | 3,1 | 0,0 |
| **Mo** | 10 | 0,3 | 6,0 | 0,1 | 8,8 | 0,1 | 3,5 | 0,0 |
| **Zr** | 47 | 0,1 | 0,038 | 9,5 | 96 | 0,01 | 0,042 | 3,1 |
| **Fe** | 0,14 | 21 | 0,18 | 2,0 | 0,10 | 9,0 | 0,11 | 1,2 |

Ce tableau montre que la présence de 0,015 mole/L de TEDGA dans la solution S2 se traduit par une augmentation du facteur de séparation entre l'américium et le curium de 60% par rapport à celui obtenu pour la solution S1, qui présente la même acidité nitrique que la solution S2 (HNO₃ = 1 M) mais est exempte de TEDGA, tandis que la présence de 0,030 mole/L de TEDGA dans la solution S4 se traduit par une augmentation du facteur de séparation entre l'américium et le curium de 45% par rapport à celui obtenu pour la solution S3, qui présente la même acidité nitrique que la solution S4 (HNO₃ = 1,9 M) mais est exempte de TEDGA.

Les facteurs de séparation FS_{Am/Cm} obtenus pour les solutions S1 et S3, qui sont proches de 1 pour des acidités nitriques de 1 mole/L et de 1,9 mole/L, ne permettent pas d'envisager l'utilisation d'une phase organique contenant un mélange de TOPO et de TBP dans un diluant organique de type TPH, pour extraire l'américium sans le curium d'une solution aqueuse de haute activité.

Par contre, les facteurs de séparation FS_{Am/Cm} obtenus pour les solutions S2 et S4, qui sont tous deux de 1,6, indiquent qu'en ajoutant du TEDGA à la solution de haute activité, il serait possible d'utiliser une phase organique contenant un mélange de TOPO et de TBP dans un diluant organique de type TPH pour récupérer 99% de l'américium en phase organique et laisser 99% du curium en phase aqueuse avec 48 étages de contacteurs discontinus.

Les coefficients de distribution D_{Am} obtenus pour les solutions S2 et S4 (0,36 *versus* 0,13) montrent que, dans ce cas, il serait préférable de se situer à une acidité nitrique de 1 mole/L de manière à avoir un rapport O/A inférieur à 3.

Comme déjà observé dans l'exemple 1 ci-avant, la présence de TEDGA dans les solutions S2 et S4 exalte la séparation des lanthanides « légers » des lanthanides « lourds » et de l'yttrium, ce qui, là également, permettrait de limiter les risques d'accumulation de ces éléments dans les étages des contacteurs.

Cet autre exemple montre également que l'augmentation du facteur de séparation entre les lanthanides et l'yttrium peut avantageusement être utilisée pour la séparation des terres rares entre elles et particulièrement de l'yttrium et des terres rares, puisque le facteur de séparation FS(Ln/Y) est supérieur à 7 avec la solution S2 (deux fois plus fort qu'avec S1), valeur largement suffisante pour récupérer plus de 99,9% d'yttrium en phase aqueuse d'extraction avec moins de 0,1% des lanthanides, avec 16 étages.

### EXEMPLE 3 : Extractions par une phase organique contenant du DMDOHEMA et de l'HEDHP dans du TPH

Des extractions ont été réalisées en utilisant :
- comme phases aqueuses : deux solutions aqueuses - dénommées ci-après S5, S6 et S7 - simulant des raffinats issus du traitement, par le procédé PUREX, de combustibles nucléaires irradiés de type UOX3 (sauf en ce qui concerne le curium 244 qui n'est présent qu'à l'état de traces dans ces solutions) et auxquelles ont été ajoutées 0,05 mole/L d'HEDTA dans le cas de la solution S5, 0,05 mole/L d'HEDTA et 0,05 mole/L de TEDGA dans le cas de la solution S6 et 0,05 mole/L d'HEDTA et 0,07 mole/L de TEDGA dans le cas de la solution S7 ; et
- comme phases organiques : des phases comprenant 0,6 mole/L de DMDOHEMA (en tant qu'extractant solvatant) et 0,3 mole/L d'HDEHP (en tant qu'extractant acide) dans du TPH.

Les compositions qualitatives et quantitatives des solutions S5, S6 et S7 sont présentées dans le tableau IV ci-après.

Tous les éléments métalliques présents dans ces solutions ont été dissous sous la forme de nitrates.

**TABLEAU IV**

| | **Concentrations en mmole(s)/L** | | |
|---|---|---|---|
| | **S5** | **S6** | **S7** |
| **HNO₃** | 4000 | 4000 | |
| **HEDTA** | 50 | 50 | |
| **TEDGA** | --- | 50 | 70 |
| **²⁴¹Am** | 0,73 | | |
| **²⁴⁴Cm** | 1,4.10⁻⁵ | | |
| **Y** | 1,7 | | |
| **Gd** | 0,32 | | |
| **Eu** | 0,34 | | |
| **Sm** | 1,8 | | |
| **Nd** | 9,4 | | |
| **Pr** | 2,6 | | |
| **Ce** | 5,7 | | |
| **La** | 2,9 | | |
| **Pd** | 5,0 | | |
| **Mo** | 12 | | |
| **Zr** | 13 | | |
| **Fe** | 1,8 | | |

Chacune des solutions S5, S6 et S7 a été mise en contact, dans des tubes, avec l'une des phases organiques (préalablement équilibrée en acide, par addition d'acide nitrique 4 M), volume à volume, et les phases ainsi mises en contact ont été laissées sous agitation pendant 10 minutes à une température constante de 25°C.

Après décantation et séparation des phases aqueuses et organiques, les activités de l'américium et du curium ont été mesurées dans chacune de ces phases par spectrométrie α.

Les concentrations des autres éléments métalliques ont été mesurées dans les seules phases aqueuses par ICP-AES. De ce fait, les coefficients de distribution, D_{M}, de ces éléments ont été déterminés en calculant la différence entre leurs concentrations initiales et finales en phase aqueuse et en calculant le rapport entre cette différence et leur concentration initiale en phase aqueuse.

Le tableau V ci-après présente, pour chacune des solutions S5, S6 et S7, les coefficients de distribution D_{M} et les facteurs de séparation FS_{Am/M} obtenus.

**TABLEAU V**

| | **S5** | | **S6** | | **S7** | |
|---|---|---|---|---|---|---|
| | **D_{M}** | **FS_{Am/M}** | **D_{M}** | **FS_{Am/M}** | **D_{M}** | **FS_{Am/M}** |
| **²⁴¹Am** | 15 | 1,0 | 3,4 | 1,0 | 0,60 | 1,0 |
| **²⁴⁴Cm** | 9,7 | 1,5 | 1,9 | 1,8 | 0,22 | 2,7 |
| **Y** | 2,8 | 5,3 | 0,14 | 24 | < 0,02 | > 30 |
| **Gd** | 5,2 | 2,9 | 0,56 | 6,1 | 0,03 | 20 |
| **Eu** | 7,8 | 1,9 | 0,96 | 3,5 | 0,07 | 8,6 |
| **Sm** | 9,8 | 1,5 | 1,0 | 3,4 | 0,2 | 3,0 |
| **Nd** | 10 | 1,5 | 3,1 | 1,1 | 1,0 | 0,6 |
| **Pr** | 11 | 1,4 | 3,7 | 0,9 | 1,8 | 0,3 |
| **Ce** | 12 | 1,3 | 4,0 | 0,9 | 2,1 | 0,3 |
| **La** | 8,5 | 1,8 | 3,4 | 1,0 | 2,1 | 0,3 |
| **Pd** | 0,05 | 300 | 0,05 | 68 | 0,05 | 12 |
| **Mo** | 50 | 0,3 | 46 | 0,07 | 50 | 0,01 |
| **Zr** | 1200 | 0,013 | 0,024 | 142 | 0,02 | 30 |
| **Fe** | 54 | 0,28 | 59 | 0,06 | 60 | 0,01 |

Ce tableau montre que, comme dans les exemples précédents, la présence de TEDGA dans les solutions S6 ou S7 exalte le facteur de séparation entre l'américium et le curium ainsi que les facteurs de séparation entre les lanthanides « légers » et les lanthanides « lourds » et l'yttrium.

### REFERENCES CITEES

**[1]** Demande internationale PCT WO 2007/135178
**[2]** ANSARI et al., Separation and Purification Technology, 66, 118-124, 2009
**[3]** SHIMOJO et al., Dalton Transactions, 37, 5083-5088, 2008
**[4]** MODOLO et al., Solvent Extraction Ion Exchange, 25, 703-720, 2007
**[5]** Demande de brevet français 2 810 679
**[6]** ANSARI et al., Separation and Purification Technology, 63, 239-242, 2008
**[7]** Demande de brevet japonais 2005-114448
**[8]** Demande de brevet français 2 907 346
**[9]** SASAKI et al., Analytical Sciences, 23, 727-731, 2007
**[10]** Demande de brevet français 2 738 663
[11] WEAVER et KAPPELMAN, Rapport ORNL-3559, 1964
**[12]** Demande de brevet français 2 845 616
**[13]** BARON et al., Proceedings of the International Conference on Back-End of the Fuel Cycle : From Research to Solutions GLOBAL'01, Paris, France, 9-13 septembre 2001, publié par INIS-FR--1108
**[14]** DHAMI et al., Separation Science & Technology, 36(2), 325-335, 2001

## Revendications

1. Utilisation d'un diglycolamide pour augmenter le facteur de séparation entre l'américium et le curium et/ou entre des lanthanides au cours d'une opération d'extraction comprenant la mise en contact d'une phase aqueuse acide dans laquelle se trouvent l'américium, le curium et/ou les lanthanides, avec une phase organique non miscible à l'eau, contenant au moins un extractant autre qu'un diglycolamide, dans un diluant organique, puis la séparation desdites phases aqueuse et organique, le diglycolamide étant ajouté à ladite phase aqueuse.

2. Utilisation selon la revendication 1, dans laquelle le diglycolamide est choisi parmi le *N,N,N',N'-*tétraméthyldiglycolamide, le *N,N,N',N'-*tétraéthyldiglycolamide et le *N,N,N',N'*-tétrapropyldiglycolamide.

3. Utilisation selon la revendication 1 ou la revendication 2, dans laquelle le diglycolamide est le *N,N,N',N'*-tétraéthyldiglycolamide.

4. Utilisation selon l'une quelconque des revendications précédentes, dans laquelle le diglycolamide est ajouté à la phase aqueuse acide à une concentration allant de 0,01 à 0,5 mole/L de phase aqueuse et, de préférence, de 0,03 à 0,1 mole/L de phase aqueuse.

5. Utilisation selon l'une quelconque des revendications précédentes, dans laquelle l'extractant présent dans la phase organique est un extractant solvatant.

6. Utilisation selon la revendication 5, dans laquelle l'extractant solvatant est choisi parmi les malonamides, les oxydes de carbamoylphosphine, les sulfures de triisobutylphosphine, les carbamoylphosphonates et leurs mélanges.

7. Utilisation selon la revendication 6, dans laquelle l'extractant solvatant est un malonamide, de préférence le *N,N'*-diméthyl-*N,N'*-dioctylhexyléthoxymalonamide.

8. Utilisation selon l'une quelconque des revendications précédentes, dans laquelle la phase aqueuse acide est une solution aqueuse nitrique issue du traitement de combustibles nucléaires irradiés.

9. Utilisation selon la revendication 8, dans laquelle la solution aqueuse nitrique contient de l'américium, du curium, des lanthanides et d'autres produits de fission et/ou de corrosion.

10. Utilisation selon la revendication 8 ou la revendication 9, dans laquelle la solution aqueuse nitrique est un raffinat issu du traitement de combustibles nucléaires irradiés par un procédé PUREX ou COEX™.

11. Utilisation selon l'une quelconque des revendications 1 à 7, dans laquelle la phase aqueuse acide est une solution aqueuse nitrique résultant de la dissolution dans de l'acide nitrique d'un minerai de terres rares.

## Patentansprüche

1. Verwendung eines Diglycolamids zur Erhöhung des Trennungsfaktors zwischen Americium und Curium und/oder zwischen Lanthaniden im Verlauf einer Extraktionsoperation, umfassend das Inkontaktbringen einer wässrigen sauren Phase, in der sich das Americium, das Curium und/oder die Lanthaniden befinden, mit einer organischen Phase, die nicht mit Wasser mischbar ist, die wenigstens ein anderes Extraktionsmittel als ein Diglycolamid enthält, in einem organischen Verdünner, und dann die Trennung der wässrigen und organischen Phasen, wobei das Diglycolamid zu der wässrigen Phase hinzugefügt wird.

2. Verwendung nach Anspruch 1, bei der das Diglycolamid ausgewählt ist aus *N, N, N', N'*-Tetramethyldiglycolamid, *N, N, N', N'*-Tetraethyldiglycolamid und *N, N, N', N'*-Tetrapropyldiglycolamid.

3. Verwendung nach Anspruch 1 oder nach Anspruch 2, bei der das Diglycolamid *N, N, N', N'*-Tetraethyldiglycolamid ist.

4. Verwendung nach einem der vorhergehenden Ansprüche, bei der das Diglycolamid zu der wässrigen sauren Phase in einer Konzentration hinzugefügt wird, die von 0,01 bis 0,5 Mol/L der wässrigen Phase geht, und vorzugsweise von 0,03 bis 0,1 Mol/L der wässrigen Phase.

5. Verwendung nach einem der vorhergehenden Ansprüche, bei der das Extraktionsmittel, das in der organischen Phase vorhanden ist, ein solvatisierendes Extraktionsmittel ist.

6. Verwendung nach Anspruch 5, bei der das solvatisierende Extraktionsmittel ausgewählt ist aus den Malonamiden, den Oxiden von Carbamoylphosphin, den Sulfiden von Triisobutylphosphin, den Carbamoyl-Phosphonaten und ihren Mischungen.

7. Verwendung nach Anspruch 6, bei der das solvatisierende Extraktionsmittel ein Malonamid ist, vorzugsweise *N, N'*-Dimethyl-*N, N'*-Dioctylhexylethoxymalonamid.

8. Verwendung nach einem der vorhergehenden Ansprüche, bei der die wässrige saure Phase eine wässrige Nitratlösung ist, die aus der Behandlung von bestrahlten Kernbrennstoffen hervorgegangen ist.

9. Verwendung nach Anspruch 8, bei der die wässrige Nitratlösung Americium, Curium, Lanthaniden und andere Spalt- und/oder Korrosionsprodukte enthält.

10. Verwendung nach Anspruch 8 oder Anspruch 9, bei der die wässrige Nitratlösung ein Raffinat ist, das aus der Behandlung von bestrahlten Kernbrennstoffen mittels eines PUREX- oder COEX™-Verfahrens hervorgegangen ist.

11. Verwendung nach einem der Ansprüche 1 bis 7, bei der die wässrige saure Phase eine wässrige Nitratlösung ist, die aus dem Auflösen eines Erzes von seltenen Erden in Salpetersäure resultiert.

## Claims

1. Use of a diglycolamide for increasing the separation factor between americium and curium and/or between lanthanides during an extraction operation comprising contacting an acid aqueous phase in which are found the americium, curium and/or lanthanides with an organic phase non-miscible with water, containing at least one extractant other than a diglycolamide, in an organic diluent, and then separating said aqueous and organic phases, the diglycolamide being added to said aqueous phase.

2. Use according to claim 1, wherein the diglycolamide is selected from *N,N,N',N'*-tetramethyldiglycolamide, *N,N,N'N*'-tetraethyldiglycolamide and *N,N,N',N'-*tetrapropyldiglycolamide.

3. Use according to claim 1 or claim 2, wherein the diglycolamide is *N,N,N',N'*-tetraethyldiglycolamide.

4. Use according to any of the preceding claims, wherein the diglycolamide is added to the acid aqueous phase at a concentration ranging from 0.01 to 0.5 mol/L of aqueous phase and preferably from 0.03 to 0.1 mol/L of aqueous phase.

5. Use according to any of the preceding claims, wherein the extractant present in the organic phase is a solvating extractant.

6. Use according to claim 5, wherein the solvating extractant is selected from malonamides, carbamoylphosphine oxides, triisobutylphosphine sulfides, carbamoylphosphonates and mixtures thereof.

7. Use according to claim 6, wherein the solvating extractant is a malonamide, preferably *N,N'*-dimethyl-*N,N'*-dioctylhexylethoxymalonamide.

8. Use according to any of the preceding claims, wherein the acid aqueous phase is a nitric aqueous solution stemming from the processing of irradiated nuclear fuels.

9. Use according to claim 8, wherein the nitric aqueous solution contains americium, curium, lanthanides and other fission and/or corrosion products.

10. Use according to claim 8 or claim 9, wherein the nitric aqueous solution is a raffinate stemming from the processing of irradiated nuclear fuels with a PUREX or COEX™ method.

11. Use according to any of claims 1 to 7, wherein the acid aqueous phase is a nitric aqueous solution resulting from the dissolution in nitric acid of a rare earth ore.
